Europäisches Patentamt

European Patent Office

Office européen des brevets

(19)

(11) Numéro de publication: **0 265 294**
**A1**

(12)

# DEMANDE DE BREVET EUROPEEN

(21) Numéro de dépôt: 87400429.4

(22) Date de dépôt: 26.02.87

(51) Int. Cl.⁴: **F 24 F 6/16**
// F24F3/14, A01G9/24,
B05B3/10, B05B12/12

(30) Priorité: 05.03.86 FR 8603207

(43) Date de publication de la demande:
27.04.88 Bulletin 88/17

(84) Etats contractants désignés: **ES GR**

(71) Demandeur: **AIRBI S.A.**
**7, rue de la Vignotte**
**F-02400 Chateau-Thierry (FR)**

(72) Inventeur: **Bidon, Daniel**
**Verdon**
**F-51210 Montmirail (FR)**

**Garet, Joelle**
**6, rue St Crépin**
**F-02400 Chateau Thierry (FR)**

(74) Mandataire: **Gérardin, Robert Jean René**
**PROT'INNOV INTERNATIONAL SA Résidence de**
**l'Observatoire avenue Georges Clémenceau Boîte**
**Postale 2764**
**F-51066 Reims Cédex (FR)**

(54) Installation de climatisation à pulvérisateurs centrifuges.

(57) L'invention concerne une installation de climatisation à pulvérisateurs centrifuges (1).

Cette installation est constituée essentiellement de pulvérisateurs centrifuges (1) équipés chacun d'un déflecteur (2), raccordés à un circuit bouclé (3) incorporant un réservoir tampon (4) alimenté en liquide, un épurateur centrifuge (5) un filtre (6) une pompe (7) des dispositifs individuels de réglage de débit (8) et une électrovanne (9), de réglage collectif de débit, commandée par un dispositif de régulation (10) asservi à un capteur de température (11) et à un capteur hygrométrique (12). Les moteurs d'entraînement (13) des pulvérisateurs (1) sont alimentés en électricité par l'intermédiaire d'un onduleur à fréquence réglable (14).

FIG.2

EP 0 265 294 A1

Bundesdruckerei Berlin

# Description

## Installation de climatisation à pulvérisateurs centrifuges.

L'invention concerne une installation de climatisation et de traitement à pulvérisateurs centrifuges.

Dans certains locaux, il est nécessaire de maintenir l'hygrométrie et la température dans des valeurs compatibles avec l'utilisation qui en est faite ; quelles que soient les conditions climatiques régnant à l'extérieur. C'est le cas notamment dans les immeubles équipés d'un système collectif de conditionnement d'air, dans certains magasins ou entrepôts, dans les serres et dans les bâtiments d'élevage.

Dans les serres, en particulier, des conditions d'hygrométrie et de température assez strictes doivent être respectées, qui, combinées à des arrosages et à des traitements périodiques judicieux, permettent d'obtenir un rendement de production maximum. Dans ce domaine, il es intéressant, pour limiter le coût des investissements, d'utiliser aussi l'installation de contrôle de l'hygrométrie pour assurer, à certains moments, le traitement phytositaire des plantes, voire pour assurer aussi l'arrosage de celles-ci.

Il existe déjà certains moyens destinés à maintenir l'hygrométrie dans les serres, parmi lesquels on peut citer :
- Un dispositif à disque tournant, cranté à sa périphérie, qui reçoit en son centre un liquide qui se disperse sous la forme d'un film de plus en plus fin vers la périphérie du disque. Les crans périphériques assurent le fractionnement de ce film. La dimension des particules diminue en fonction de la vitesse de rotation du disque.
- Un système combinant l'air et l'eau, sous la forme d'une pulvérisation de l'eau par de l'air comprimé à l'intérieur d'une buse de projection.
- Des installations à eau sous pression assurant une pulvérisation très fine par l'intermédiaire de gicleurs de très petite section.
- La division ultrasonique par passage très rapide d'air comprimé dans une chambre spéciale alimentée en liquide ; ce qui provoque la dispersion du liquide en fines particules.

Ces dispositifs sont assez fragiles, consomment beaucoup de puissance, sont assez sensibles à l'entartrage et à l'encrassement et ne permettent pas, dans certains cas, d'obtenir une pulvérisation assez fine.

La présente invention a pour but de remédier à ces inconvénients. L'invention telle qu'elle est caractérisée dans les revendications résout le problème consistant à créer une installation de climatisation maintenant l'hygrométrie et la température dans une plage bien définie et permettant la diffusion de produits phytositaires, nutritionnels, anti-septiques ou autres.

Cette installation de climatisation à pulvérisateurs centrifuges se caractérise principalement en ce qu'elle est constituée, pour l'essentiel de pulvérisateurs centrifuges équipés chacun d'un déflecteur, de forme et d'inclinaison déterminées en fonction de la surface à couvrir. Les pulvérisateurs sont raccordés hydrauliquement à un circuit bouclé incorporant : un réservoir tampon alimenté en liquide, un épurateur centrifuge, un filtre auto-nettoyant, une pompe, des dispositifs individuels de réglage de débit, une électrovanne de réglage collectif de débit commandée par un dispositif de régulation asservi à un capteur de température et à un capteur hygrométrique. Les moteurs d'entraînement des pulvérisateurs centrifuges sont alimentés en électricité par l'intermédiaire d'un onduleur à fréquence réglable.

Les déflecteurs, dont sont équipés les pulvérisateurs, se présentent sous la forme d'une corolle plane, concave ou convexe, fixée à la base du moteur d'entraînement et formant un angle α de **75** à **90°** par rapport à l'axe de celui-ci. Le bord extérieur de cas déflecteurs est de forme circulaire, elliptique ou rectangulaire. Le bord intérieur de cas déflecteurs laisse subsister, autour de la base des moteurs d'entraînement, un passage de section correspondant environ à **1,5** fois la section de la tête de pulvérisation centrifuge.

Ces déflecteurs représentent, dans leur plus grande dimension, environ trois fois de diamètre extérieur des têtes de pulvérisation centrifuge, alors que le diamètre de leur ouverture correspond environ à **1,5** fois de diamètre extérieur de ces mêmes têtes.

Le bord intérieur des déflecteurs est équipé d'une gouttière torique assurant la récupération des égouttures et le recyclage de celles-ci, par l'intermédiaire d'une conduite raccordée à la tuyauterie d'alimentation du pulvérisateur centrifuge.

La tête de pulvérisation centrifuge est surmontée d'un disque fixe, réglable en distance par rapport au bord supérieur de la tête de pulvérisation centrifuge. La distance **X** de ce disque fixe, par rapport à l'ouverture du déflecteur, correspond environ au quart du diamètre de la tête de pulvérisation.

Les avantages obtenus grâce à cette invention consistent essentiellement en ceci, que l'installation est simple, puisque c'est la centrifugation qui assure la division des fluides, même chargés, et que c'est le déflecteur, dont est équipé chacun des pulvérisateurs, qui assure la dispersion. La possibilité de réglage de la finesse de pulvérisation, par action sur la vitesse de rotation des têtes de pulvérisation, permet d'adapter l'installation à toutes les utilisations.

D'autres caractéristiques et avantages apparaîtront dans la description qui va suivre d'une installation de climatisation de serres, réalisée selon l'invention, donnée à titre d'exemple non limitatif au regard des dessins annexés sur lesquels :
- La figure **1** représente une vue de face, en coupe, du dispositif de pulvérisation centrifuge.
- La figure **2** représente le schéma de l'installation de climatisation.

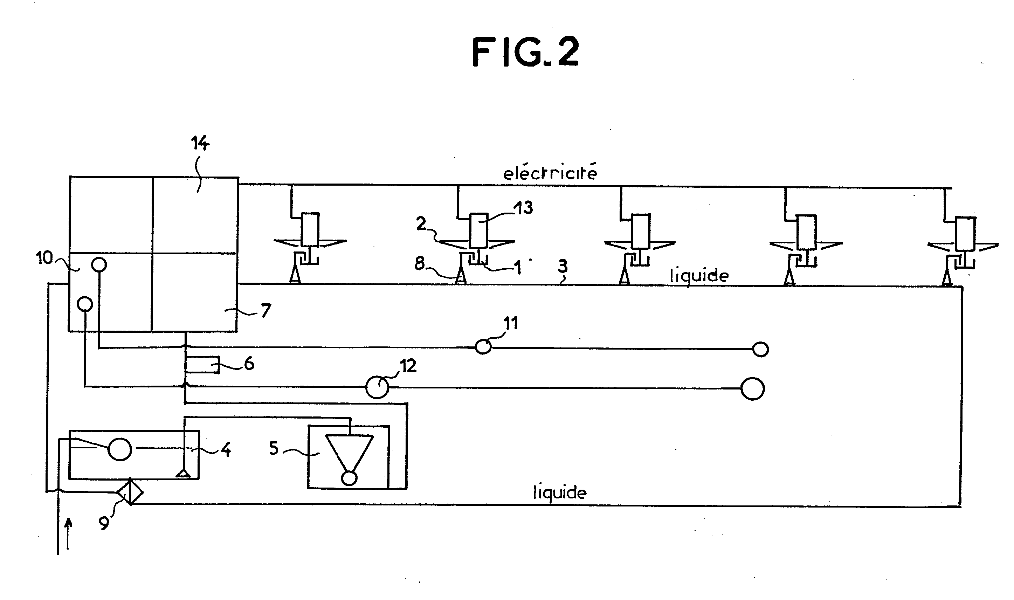

La figure **2** représente une installation de climatisation de serres comprenant essentiellement des pulvérisateurs centrifuges **1**, équipés chacun d'un déflecteur **2**, raccordés hydrauliquement à un circuit bouclé **3**, incorporant un réservoir tampon **4** alimenté en liquide, un épurateur centrifuge **5**, un filtre auto-nettoyant **6**, une pompe **7**, des dispositifs individuels de réglage de débit **8** et une électrovanne **9** de réglage collectif de débit, commandée par un dispositif de régulation automatique **10** asservi à un capteur de température **11** et à un capteur d'hygrométrie **12**. Les moteurs d'entraînement **13** des pulvérisateurs **1** sont alimentés en électricité par l'intermédiaire d'un onduleur à fréquence réglable **14**.

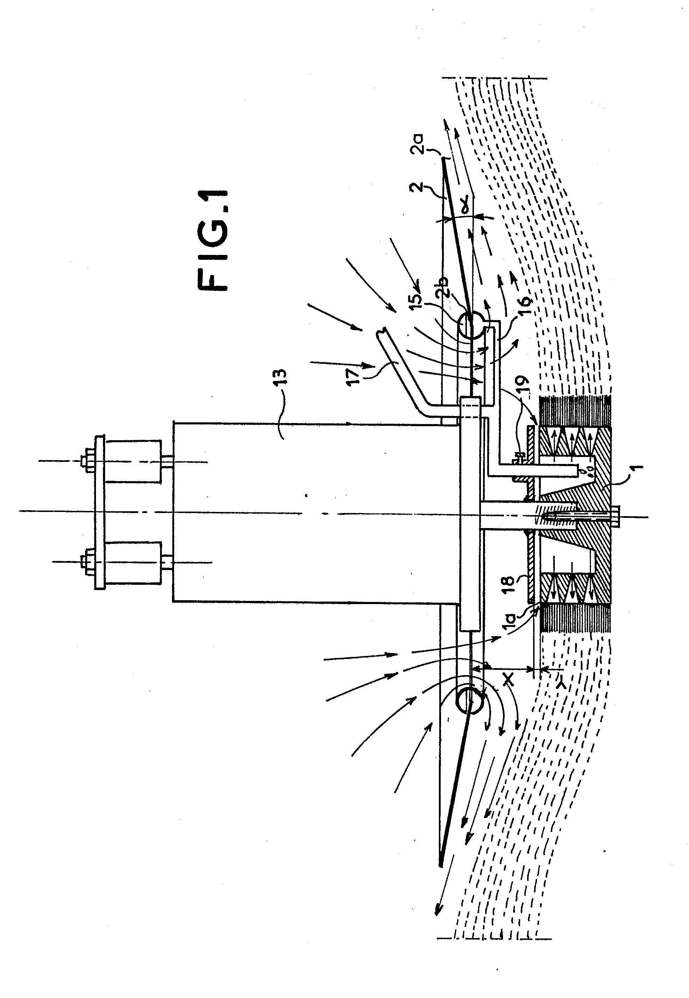

La figure **1** représente un pulvérisateur centrifuge **1** équipé d'un déflecteur **2**, fixé à la base du moteur d'entraînement **13**, équipé d'une gouttière torique **15** reliée à la tuyauterie d'alimentation **17** par une conduite **16**. La tête du pulvérisateur centrifuge **1** est surmontée d'un disque **18**, traversé par la tuyauterie d'alimentation **17** et fixé de façon réglable à celle-ci, afin de pouvoir modifier l'écartement **Y** de la tête du pulvérisateur centrifuge **1**. Ce réglage s'effectue par action sur une vis de blocage **19**.

Comme on le voit en examinant la figure **2**, le bord intérieur **2b** du déflecteur **2**, qui entoure la base du moteur d'entraînement **13**, permet un passage d'air autour de ce dernier qui a pour effet, en combinaison avec la forme et l'inclinaison α du déflecteur **2**, de propulser les particules liquides sur une grande distance par effet coanda, qui peut être accentué en donnant à la corolle une section concave ou convexe. La surface couverte par chaque pulvérisateur peut être modulée, en fonction de la forme du contour du bord extérieur **2a** du déflecteur. Ainsi, un contour rectangulaire permet de couvrir une serre sur une fraction aussi importante que possible de sa longueur, en limitant la couverture transversale à la largeur utile de la serre, afin d'éviter notamment les projections contre les parois.

Les égouttures qui se déposent sur et sous le déflecteur **2** sont collectées dans la gouttière torique **15**, fendu vers l'extérieur, pour être ensuite recyclées directement dans la tête de pulvérisation **1** par l'intermédiaire de la conduite **16** et de la tuyauterie **17**.

L'écartement du déflecteur **2**, par rapport à la tête de pulvérisation **1** et son inclinaison α par rapport au plan perpendiculaire à l'axe du moteur **13** détermine l'angle de projection. L'angle α optimum est d'environ 15°. Un écartement **Y** déterminé, du disque fixe **18** par rapport au bord supérieur **1a** de la tête de pulvérisation **1**, permet une pénétration d'air dans la cavité de la tête de pulvérisation qui favorise la pulvérisation et la projection du liquide. Cette proportion d'air par rapport au débit de liquide est ajustable par action sur la vis de blocage **19**.

En examinant la figure **2**, on remarque que la vitesse de rotation des pulvérisateurs centrifuges **1** et, par conséquent, le degré de pulvérisation peut être réglé collectivement par action sur l'onduleur **14**. Les débits peuvent être ajustés individuellement par action sur les dispositifs de réglage **7**. Quant au maintien d'une hygrométrie et d'une température déterminée à l'intérieur de l'enceinte, il est assuré par l'intermédiaire des capteurs **11** et **12**, du régulateur **10** qui contrôle l'électrovanne **9** de réglage de débit collectif des pulvérisateurs **1** par action sur le retour de la boucle d'alimentation **3**.

L'alimentation du réservoir tampon **4** est contrôlée par l'intermédiaire d'un flotteur.

Les moteurs d'entraînement des pulvérisateurs centrifuges **1**, d'une puissance de **180** à **200 Watt**, assurent l'entraînement des têtes à **3 500 t/minute** sous une fréquence de **50 Hertz**, l'onduleur **13** modifie cette fréquence et l'amène à **10 000 t/mn** pour **150 Hertz**, puis à **15 000 t/mn** pour **200 Hertz** ; ce qui correspond à la vitesse de brumisation.

Avec une installation d'une puissance de **20** à **25 KW**, il est possible de faire fonctionner **50** à **60** têtes de pulvérisation simultanément, ce qui permet de pulvériser **10 800 liters** par hectare et par heure.

**Revendications**

1. Installation de climatisation à pulvérisateurs centrifuges caractérisée en ce qu'elle est constituée essentiellement de pulvérisateurs centrifuges **(1)** équipés chacun d'un déflecteur **(2)** de forme et d'inclinaison déterminées en fonction de la surface à couvrir, en ce que les pulvérisateurs sont raccordés hydrauliquement à un circuit bouclé **(3)** incorporant: un réservoir tampon **(4)** alimenté en liquide, un épurateur centrifuge **(5)**, un filtre auto-nettoyant **(6)**, une pompe **(7)**, des dispositifs de réglage individuel de débit **(8)** et une électrovanne **(9)** de réglage collectif de débit commandée par un dispositif de régulation **(10)** asservi à un capteur de température **(11)** et à un capteur hygrométrique **(12)**, en ce que les moteurs d'entraînement **(13)** des pulvérisateurs centrifuges **(1)** sont alimentés en électricité par l'intermédiaire d'un onduleur à fréquence réglable **(14)**.

2. Installation de climatisation selon la revendication 1, caractérisée en ce que les déflecteurs **(2)** dont sont équipés les pulvérisateurs centrifuges **(1)** sont constitués d'une corolle plane, concave ou convexe, fixée à la base du moteur d'entraînement **(13)** et formant un angle α de **75** à **95°** par rapport à l'axe de celui-ci.

3. Installation de climatisation selon la revendication 1, caractérisée en ce que le bord extérieur **(2a)** des déflecteurs **(2)** est de forme circulaire, ellitique ou rectangulaire.

4. Installation de climatisation selon la revendication 1, caractérisée en ce que le bord intérieur **(2b)** des déflecteurs **(2)** laisse subsister, autour de la base du moteur **(13)** un passage de section correspondant environ à **1,5** fois la section de la tête du pulvérisateur centrifuge **(1)**.

5. Installation de climatisation selon la revendication 1, caractérisée en ce que le diamètre de l'ouverture des déflecteurs **(2)** correspond environ à **1,5** fois le diamètre extérieur de la tête du pulvérisateur centrifuge **(1)**.

6. Installation de climatisation selon la revendication 1, caractérisée en ce que les déflecteurs **(2)** représentent dans leur plus grande dimension environ trois fois le diamètre extérieur des têtes des pulvérisateurs centrifuges **(1)**.

7. Installation de climatisation selon la revendication **1**, caractérisée en ce que le bord intérieur **(2b)** des déflecteurs **(2)** est équipé d'une gouttière torique **(15)** assurant la récupération des égouttures et le recyclage direct de celles-ci par l'intermédiaire d'une conduite **(16)** raccordée à la tuyauterie d'alimentation **(17)** de la tête du pulvérisateur centrifuge **(1)**.

8. Installation de climatisation selon la revendication **1**, caractérisée en ce que la tête du pulvérisateur **(1)** est surmontée d'un disque fixe **(18)** réglable en distance par rapport au bord supérieur $(1_a)$ de la tête du pulvérisateur centrifuge **(1)**.

9. Installation de climatisation selon la revendication **8**, caractérisée en ce que le disque **(18)** est fixé sur la tuyauterie d'alimentation **(17)**, qui le traverse, par l'intermédiaire d'une vis de blocage **(19)**.

10. Installation de climatisation selon la revendication **8**, caractérisée en ce que le disque fixe **(18)**, dont est surmontée la tête du pulvérisateur **(1)**, est située à une distance $X$ par rapport à l'ouverture du déflecteur **(2)**, correspondant environ au quart du diamètre de la tête du pulvérisateur centrifuge **(1)**.

0265294

**FIG.1**

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 671 023 (SEIL)<br>* Colonne 2, lignes 16-27,71-75, figures * | 1 | F 24 F 6/16 //<br>F 24 F 3/14<br>A 01 G 9/24<br>B 05 B 3/10<br>B 05 B 12/12 |
| | --- | | |
| A | GB-A-2 086 617 (TOKYO SHIBAURA DENKI)<br>* Résumé; figures * | 1 | |
| | --- | | |
| A | DE-B-1 013 918 (MAUSER)<br>* Colonne 4, lignes 29-38; figures * | 1 | |
| | --- | | |
| A | FR-A- 851 937 (DAMOND)<br>* Figures 18,19 * | 1 | |
| | --- | | |
| A | US-A-2 101 603 (STIMSON)<br>* Page 1, colonne de droite, lignes 11-41; figure 1 * | 1 | DOMAINES TECHNIQUES RECHERCHES (Int. Cl.4) |
| | --- | | F 24 F<br>A 01 G |
| A | US-A-2 904 254 (BAHNSON) | | B 05 B<br>G 05 D |
| | ----- | | |

Le présent rapport de recherche a été établi pour toutes les revendications

| Lieu de la recherche<br>LA HAYE | Date d'achèvement de la recherche<br>25-05-1987 | Examinateur<br>BORRELLI R.M.G.A. |
|---|---|---|